# EUROPÄISCHE PATENTSCHRIFT

(11) **EP 3 385 009 B1**
(45) Veröffentlichungstag und Bekanntmachung des Hinweises auf die Patenterteilung: **08.07.2020**
(21) Anmeldenummer: 18160449.7
(22) Anmeldetag: 07.03.2018
(51) Int. Cl.: B21D 19/08, B21D 22/20, B21D 28/06, B21D 53/24, B21D 35/00

(54) **VORRICHTUNG UND VERFAHREN ZUR HERSTELLUNG EINES GEWINDEFORMTEILS**
METHOD AND DEVICE FOR PRODUCING A THREADED PART
PROCÉDÉ ET DISPOSITIF DE FABRICATION D'UNE PIÈCE FILETÉE

(30) Priorität: 07.03.2017 DE 102017203701
(43) Veröffentlichungstag der Anmeldung: 10.10.2018
(73) Patentinhaber: Metallwarenfabrik Haugg GmbH, 51709 Marienheide (DE)
(72) Erfinder: Eisenbach, Werner, 51709 Marienheide (DE)
(74) Vertreter: Grünecker Patent- und Rechtsanwälte PartG mbB

(56) Entgegenhaltungen:
- WO-A1-93/09896
- DE-A1-102011 081 966
- FR-A1- 2 787 048
- US-A- 3 010 126
- US-A- 5 069 051

## Beschreibung

Die vorliegende Erfindung betrifft eine Vorrichtung zur Herstellung eines Gewindeformteils aus einem Blechstreifen gemäß dem Oberbegriff des Anspruchs 1, wie z.B. aus der US 3 010 126 A bekannt. Die vorliegende Erfindung betrifft weiterhin ein Verfahren gemäß dem Anspruch 9. Die vorliegende Erfindung betrifft insbesondere eine Vorrichtung zur Herstellung eines Gewindeformteils durch Umformen. Dabei betrifft die vorliegende Erfindung insbesondere eine Vorrichtung und ein Verfahren zum Herstellen eines Elektrogewindes gemäß DIN 40 400. Solche Gewinde werden als Elektrogewinde bezeichnet und dienen insbesondere der Aufnahme von Fassungen von Leuchtmitteln. Zwar betrifft die vorliegende Erfindung ganz allgemein zunächst das Herstellen eines Gewindeformteils. Es geht aber insbesondere um die Herstellung einer Halterung für ein solches Leuchtmittel, die auch als Gewindebrücke bezeichnet werden kann und bevorzugt ein Elektrogewinde nach der zuvor genannten Norm hat.

Halterungen der eingangs genannten Art aus einem Blech mit einem Elektrogewinde und Befestigungseinrichtungen zur Befestigung der Halterung an einem Gehäuse, welches das Leuchtmittel trägt, werden heutzutage zunächst aus einem Blechstreifen durch Stanzbearbeitung hergestellt. Im Rahmen dieser Stanzbearbeitung wird an dem Blechstreifen eine Hülse ausgeformt, die der Aufnahme des Leuchtmittels dient und die in einem späteren Arbeitsschritt mit dem Elektrogewinde versehen wird. Im Rahmen der Stanzbearbeitung wird an dem Blechstreifen besagte Hülse ausgebildet. Das Ausbilden der Hülse erfolgt üblicherweise in mehreren Umformschritten. Üblicherweise nach Ausbilden der Hülse wird der Blechstreifen so beschnitten, dass zu jeder Hülse zumindest ein Befestigungsmittel beispielsweise in Form einer Lasche oder eines Gewindeauges zur Befestigung der Halterung an dem Gehäuse der Lampe ausgebildet wird. Am Ende dieser Stanzbearbeitung werden die stanzbearbeiteten Rohlinge geschnitten, sodass jede bereits in Endkontur hergestellte Halterung individualisiert wird. Danach wird der Rohling für die Halterung einer erneuten Bearbeitung unterzogen, um durch Kaltverformen das Elektrogewinde auszuprägen.

Die vorbekannte Vorgehensweise ist aufwendig, da die zunächst vereinzelten Halterungen erneut gegriffen und eingespannt werden müssen, um das Gewinde auszuformen. Darüber hinaus kann nicht zuverlässig sichergestellt werden, dass jede Halterung beim Ausformen des Gewindes die gleiche Ausrichtung hat. So kann das Gewinde schräg in der Hülse ausgebildet werden. Des Weiteren wird der Anfangspunkt des Gewindes um einen gewissen Winkelbetrag gegenüber einem anderen derselben Serie versetzt, sodass es schwierig ist, das Leuchtmittel automatisiert einzudrehen. Die Handhabung des Rohlings der Halterung zum Ausbilden des Gewindes führt zu gewissen Ungenauigkeiten im Rahmen der Massenherstellung der Halterung, die es grundsätzlich schwierig machen, die Halterung in einem nachfolgenden automatisierten Bestückungsprozess mit dem Gehäuse der Lampe zu verbinden.

Hier will die vorliegende Erfindung Abhilfe schaffen. Sie schlägt dementsprechend eine Vorrichtung zur Herstellung eines Gewindeformteils aus einem Blechstreifen vor, der durch Umformen mit einer einteilig an dem Blechstreifen ausgebildeten Hülse versehen ist. In an sich bekannter Weise wird diese Hülse durch mehrere Umformschritte regelmäßig zwischen einem Dorn und einer Matrize eines Stanzwerkzeuges hergestellt, welches einen Arbeitstisch ausbildet, auf dem der Blechstreifen aufliegt. Gemäß der vorliegenden Erfindung liegt aber der Blechstreifen auch auf diesem Arbeitstisch beim Einprägen des Gewindes auf. Mit anderen Worten erfolgt das Einprägen des Gewindes im Rahmen der Stanzbearbeitung des Blechstreifens und vor dem Individualisieren der Halterung durch Abtrennen von dem kontinuierlich zugeführten Blechstreifen.

Die erfindungsgemäße Vorrichtung hat hierzu einen profilierten Dorn zum Einprägen des Gewindes an der Hülse. Als Einprägen wird in diesem Zusammenhang insbesondere ein Umformen des die Hülse ausbildenden Blechmaterials verstanden. Das Gewinde wird nicht geschnitten. Der Dorn ist drehbar und axial verschieblich. Die Drehbewegung erfolgt dabei in Übereinstimmung mit der Steigung des Gewindes. Hierzu ist gemäß der vorliegenden Erfindung ein Getriebe zur Zwangskopplung der Drehbewegung des Dorns mit der axialen Verschiebung vorgesehen. So wird sichergestellt, dass beim Einbringen des Dorns in die Hülse dort das Gewinde mit der gewünschten Steigung eingeprägt wird.

Dem profilierten Dorn sind zumindest zwei Haltebacken zugeordnet, die aufeinander zu beweglich sind, um beim Einprägen des Gewindes an der Außenseite der Hülse anzulegen. Die Haltebacken sind mit einer Gegenprofilierung zu der Profilierung des Dorns versehen. So wird das Blechmaterial im Bereich der Hülse durch Zusammenwirken von Dorn und Haltebacken mit der gewünschten Geometrie umgeformt, um einteilig an dem Blechstreifen eine Hülse üblicherweise mit einem Elektrogewinde gemäß DIN 40 400 auszubilden. Der Dorn kann im Prinzip wie ein Gewindeschneider ausgebildet sein, sodass mit zunehmender Eindringtiefe in radialer Richtung wachsende Profilierungen an der Außenumfangsfläche des Dorns vorgesehen sind, die kontinuierlich zur vollständigen Ausbildung des Gewindes beitragen. Am vorderen Ende des Dorns findet zunächst eine anfängliche Umformung des Materials der Hülse statt. Mit zunehmendem Eindringen des Dorns in die Hülse wird auch der Grad der radialen Verformung der Hülse erhöht, bis an der Hülse das gewünschte Gewinde in Endkontur hergestellt ist. Mit Blick auf eine Verringerung der Reibung kann der Dorn in Umfangsrichtung verteilt ausgebildete Vorsprünge haben, die jeweils mit der Innenumfangsfläche der Hülse zusammenwirken, wohingegen zwischen diesen Vorsprüngen Einbuchtungen vorgesehen sind, in denen kein unmittelbarer Kontakt zwischen dem profilierten Dorn und der Innenumfangsfläche der Hülse besteht.

Als profilierter Dorn kann aber insbesondere ein Dorn zum Einsatz kommen wie er in FR 2 787 048 beschrieben ist. Dieser Dorn hat mehrere auf dem Umfang verteilt angeordnete profilierte Rollen, die jeweils für sich an dem Dorn drehbar gelagert sind. Die zum Ausbilden des Gewindes erforderliche Profilierung an der Außenumfangsfläche des Dorns wird jeweils durch Teilabschnitte der Rollen ausgebildet. Die drehbare Lagerung der einzelnen Rollen vermindert die Reibkraft bei dem Einprägen des Gewindes. So ist nicht zu befürchten, dass beim Umformen der Hülse zur Ausbildung des Elektrogewindes Späne oder Abrieb entstehen, die bei der späteren Verwendung der Halterung als elektrischer Anschluss Ausgangspunkt für Kurzschlüsse und/oder eine unsaubere Kontaktierung für das in der Hülse gehaltene Leuchtmittel sein können.

Die erfindungsgemäße Vorrichtung bietet die Möglichkeit, eine Hülse als Teil eines kontinuierlichen Blechstreifens durch Verformung mit einem Gewinde auszubilden. Der äußere Umgriff der Hülse beim Gewindeformen erfolgt durch die Haltebacken, die nach Fertigstellung des Gewindes von der Hülse wegbewegt werden, um die Hülse freizugeben. Der profilierte Dorn greift in die Hülse ein, und zwar derart, dass die an dem Dorn vorgesehene Außenprofilierung mit der Gegenprofilierung der Haltebacken übereinstimmt. In dieser Weise ausgerichtet kann bei jedem Hub, d.h. Eindringen des Dornes zum Einprägen des Gewindes in vorbestimmter Weise eine identische Gewindegeometrie ausgebildet werden. Die so hergestellten Bauteile lassen sich zuverlässig durch automatisierte Handhabung in Lampengehäuse einbauen und mit Leuchtmitteln bestücken.

Bei der vorliegenden Erfindung werden zumindest zwei aufeinander zu bewegliche Haltebacken mit einer Gegenprofilierung verwendet. So unterscheidet sich die Erfindung von der aus DE 10 2011 081 966 A1 vorbekannten Lösung, die ein Verfahren zur Herstellung eines Gewindeteils offenbart, bei dem aus einem Metallrohr ein Gewindeteil hergestellt werden kann. Bei diesem vorbekannten Verfahren wird in einem zylindrischen Metallteil, welches sich zwischen Formungsbacken befindet, ein hoher Innendruck erzeugt, der die Blechwände gegen eine negative Gewindeform eines Formgebungswerkzeuges drückt. Bei einer alternativen Ausgestaltung wird ein dreieckiger Gewindefurcher in das zunächst zylindrische Bauteil eingebracht. Der Gewindefurcher wird axial verschoben und gedreht. Er verformt eine zylindrische Blechhülse gegen die Außenkontur eines Formgebungswerkzeuges. Dieses Formgebungswerkzeug ist rohrförmig. Die mit dem Gewinde versehene Hülse muss aus dem Formgebungswerkzeug herausgeschraubt werden. Dem gegenüber bietet die Lösung nach der vorliegenden Erfindung mit zwei beweglichen Haltebacken den Vorteil, dass nicht nur rotationssymmetrische Bauteile, sondern insbesondere auch Halterungen, d.h. Hülsen mit daran angeformten Laschen und dergleichen hergestellt werden können. Durch Öffnen der Haltebacken kann das umgeformte Werkstück entformt werden.

Ein anderes Verfahren zum Herstellen eines Gewindeteils aus einem hülsenförmigen Werkstück offenbart WO 93/09896.

Die zuvor erwähnten Vorrichtungsmerkmale für das Einprägen des Gewindes sind bevorzugt der Stanzvorrichtung zugeordnet, die zwischen Unterteil und Oberteil den Blechstreifen für das Gewindeprägen vorbereitet und die Hülse ausformt. Eine solche Stanzvorrichtung hat bevorzugt eine Gewindeprägestation, an der der Dorn und die Haltebacken vorgesehen sind. Der Dorn und der Tisch sind üblicherweise dem ortsfesten Unterteil der Stanzvorrichtung zugeordnet. Die Stanzvorrichtung weist in an sich bekannter Weise ein Oberteil auf, das bevorzugt mit zumindest einem Stempel zum Ausbilden der Hülse versehen ist. Dieser zumindest eine Stempel ist regelmäßig in Förderrichtung des Blechstreifens dem Dorn vorgelagert. Das Getriebe zur Zwangskopplung der Drehbewegung des Dorns mit dem axialen Vorschub desselben ist hierbei bevorzugt mit einer Zahnstange antriebsverbunden, die mit einem dem Getriebe zugeordneten Zahnrad kämmt und die fest mit dem Oberteil verbunden ist. Das Einbinden der Gewindeprägestation in die Stanzvorrichtung erlaubt dementsprechend nicht nur eine einheitliche Taktung bis zur Fertigstellung der Halterung, sondern auch die Nutzung der Höhenbewegung zwischen Unterteil und Oberteil bei jedem Hub. Dieser Hub wird über die Zahnstange als Antriebsenergie in das Getriebe eingebracht, um den profilierten Dorn drehend anzutreiben und axial in die Hülse vorzuschieben. Die Zahnstange greift dabei üblicherweise in ein Getriebegehäuse ein, welches das besagte Zahnrad trägt, das üblicherweise mit weiteren Zahnrädern innerhalb des Getriebegehäuses antriebsverbunden ist, von welchen zumindest ein Zahnrad in der Regel mit einer Antriebskette verbunden ist, die dem profilierten Dorn eine Drehbewegung aufprägt, um diesen in die Hülse drehend einzubringen. In energetisch günstiger Weise ist somit eine Zwangskopplung geschaffen, die dafür sorgt, dass der Dorn mit jedem Hub zwischen Oberteil und Unterteil der Stanzvorrichtung in vorbestimmter und gleicher Weise in die jeweilige Hülse des Blechstreifens eingebracht wird, während der Blechstreifen zwischen jedem Hub - wie beim Leistungsstanzen üblich - um eine Station in Vorschubrichtung vorgerückt wird.

Mit Blick auf eine vollkommene Fertigstellung der Halterung vor dem Abtrennen von dem Blechstreifen und zur bestmöglichen Befestigung der Halterung an einem Lampengehäuse hat die Halterung üblicherweise ein Gewindeauge, in dem ein Gewinde eingeschnitten ist. Über dieses Gewinde kann die Halterung an dem Lampengehäuse festgeschraubt werden. Mit Blick darauf schlägt die vorliegende Erfindung gemäß einer Weiterbildung vor, an der Stanzvorrichtung eine Gewindeschneidstation vorzusehen, die einen drehbar angetriebenen Gewindeschneider hat, der über ein Gewindeschneidgetriebe antreibbar ist. Das Gewindeschneidgetriebe ist bevorzugt bei dieser bevorzugten Weiterbildung an dem Oberteil der Stanzvorrichtung montiert und hat ein mit einer Zahnstange kämmendes Zahnrad. Wie zuvor für das Getriebe des profilierten Dorns beschrieben ist auch hier eine Zahnstange vorgesehen, die mit dem entsprechenden Zahnrad kämmt, die aber für die Gewindeschneidstation mit dem Unterteil verbunden ist. So wird auch durch dieses Gewindeschneidgetriebe der Hub zwischen Oberteil und Unterteil genutzt, um den zumindest einen Gewindeschneider drehend anzutreiben. Da aber der Gewindeschneider dem Oberteil zugeordnet ist, erfolgt das Eindringen des Gewindeschneiders in eine zylindrische Ausnehmung im Bereich des Gewindeauges durch die Relativbewegung zwischen Oberteil und Unterteil der Stanzvorrichtung. Der Gewindeschneider kann in Höhenrichtung fest mit dem Oberteil verbunden sein. Auch hier führt indes die Zwangskopplung zwischen der Höhenbewegung von Oberteil und Unterteil und der Drehbewegung des Gewindeschneiders dazu, dass das Gewinde sicher mit der nötigen Steigung ausgebildet wird und dass durch Fehlbedienungen oder dergleichen mehr keine Beschädigung eines im Eingriff mit dem Blechstreifen befindlichen Gewindeschneiders zu befürchten ist. Es kann nicht vorkommen, dass der Gewindeschneider aus dem durch diesen geschnittenen Gewinde herausgerissen wird und/oder der Blechstreifen in Bewegungsrichtung vorgeschoben wird, ohne dass der Gewindeschneider drehend aus dem Blechstreifen und dem darin geschnittenen Gewinde herausgezogen worden ist.

Gemäß einer bevorzugten Weiterbildung der vorliegenden Erfindung hat die Vorrichtung eine Einstelleinrichtung, mit welcher bei einer gegebenen axialen Position des Dorns dessen Winkellage einstellbar ist. Diese Überlegung lässt sich davon leiten, dass die Haltebacken bevorzugt lediglich linear in Richtung auf die Außenumfangsfläche der Hülse zugestellt werden können und in Höhenrichtung, d.h. axialer Erstreckung der Hülse eine feste Position haben. Da die Haltebacken mit einer Gegenprofilierung vorgesehen sind ist sicherzustellen, dass der profilierte Dorn in exakter Positionierung relativ zu der Gegenprofilierung in die Hülse eingebracht wird. Andernfalls kann es zum Verklemmen des profilierten Dorns kommen, da das umzuformende Blechmaterial nicht in der gewünschten Weise nach außen in die Gegenprofilierung der Haltebacken ausweichen kann. Das Abstimmen der Gewindegänge der Gegenprofilierung mit den von dem profilierten Dorn vorgegebenen Gewindegängen erfolgt über die besagte Einstelleinrichtung. Diese Einstelleinrichtung hat üblicherweise eine Gewindebuchse, die mit einem Spindelgewinde einer Leitspindel kämmt. Die Leitspindel ist Teil des Getriebes zur Zwangskopplung der Drehbewegung des Dorns mit der axialen Verschiebung desselben. Das Getriebe umfasst ferner ein Zahnrad, welches üblicherweise als Kettenrad ausgebildet ist und von einer umlaufenden Kette angetrieben wird. In diesem Zahnrad ist die Leitspindel verdrehfest aufgenommen. Die Leitspindel hat üblicherweise einen nicht rotationssymmetrischen Außenquerschnitt, der passend zu einem entsprechenden Querschnitt innerhalb des Zahnrades ausgebildet ist, sodass die Leitspindel verdrehfest mit dem Zahnrad gekoppelt ist, jedoch axial verschieblich. Die Gewindebuchse hingegen macht die Drehbewegung des Zahnrades nicht mit, sodass die Drehbewegung der Leitspindel in einen axialen Vorschub derselben überführt wird. Die zuvor erwähnten Teile des Getriebes sind in einem Getriebegehäuse aufgenommen, welches üblicherweise die Gewindebuchse verdrehfest hält. Diese verdrehfeste Halterung ist aber lösbar, um die Winkellage der Leitspindel bei vorgegebener axialer Positionierung derselben zu verändern.

Die Leitspindel ist bei der bevorzugten Weiterbildung dasjenige Bauteil, welches den profilierten Dorn trägt und in die Hülse eindrückt. Dazu kann der Dorn mit einer üblichen Konusverbindung in der Leitspindel aufgenommen und verdrehfest damit verbunden sein. Das Getriebegehäuse wiederum bildet eine Aufnahme aus, in dem die Gewindebuchse zumindest verschwenkbar, üblicherweise drehbar aufgenommen ist. Die Anpassung der durch die Aufnahme ausgebildeten Innenumfangsfläche an die Außenumfangsfläche der Gewindebuchse ist dabei derart, dass die Gewindebuchse konzentrisch in dem Gewindegehäuse gehalten und ausgerichtet ist.

Gemäß einer bevorzugten Weiterbildung der vorliegenden Erfindung ist die Bewegung der Haltebacken mit der linearen Bewegung des Dorns zwangsgekoppelt. Diese Zwangskopplung kann eine unmittelbare Kopplung sein, bei welcher der Antrieb für den Dorn, insbesondere die Leitspindel mittelbar oder unmittelbar auf die Haltebacken einwirkt. Die Kopplung kann aber auch aufgrund der bevorzugten Ausgestaltung der vorliegenden Erfindung erfolgen, bei welcher das Oberteil und das Unterteil über Zahnstangen oder andere Mittel zur Übertragung der Relativbewegung der beiden Teile vorgesehen sind. Bei einer einfachen Ausgestaltung kann das Oberteil mit einer Führungsfläche versehen sein, die an einer der in der Regel dem Unterteil zugeordneten und in Höhenrichtung festgelegten Haltebacke anliegt. So können beide Haltebacken über eine Feder vorgespannt voneinander weggedrängt werden. Diese Neigung der Klemmbacken sich voneinander und von dem mittig dazu vorgesehenen profilierten Dorn zu entfernen, kann durch die Führungsfläche begrenzt werden. Die Führungsfläche ist dabei insbesondere an einem lösbar mit dem Oberteil verbundenen Klemmblock ausgebildet, der zur Anpassung der Vorrichtung an unterschiedliche Gewindedurchmesser und dabei Ausgestaltungen der Haltebacken auswechselbar vorgesehen sein kann. Durch Zusammenwirken der der Feder vorgespannten Klemmbacken mit zwei einander gegenüberliegenden Klemmblöcken werden die Haltebacken jeweils mit angemessenem Abstand relativ zueinander beabstandet, wobei in einer Einführposition für die Hülse die Backen maximal voneinander beabstandet sind, um die Hülse zwischen die Backen zu führen. In einer Arbeitsposition liegen die Haltebacken an der Außenumfangsfläche der Hülse an. Diese Ausgestaltung hat den weiteren Vorteil, dass die Klemmbacken beim Einprägen des Gewindes starr über Gegenflächen, die an dem Oberteil, vorliegend bevorzugt an dem Klemmblock vorgesehen sind, widergelagert werden. So ist den Klemmbacken die Möglichkeit genommen, im Rahmen der plastischen Verformung des Blechmaterials auszuweichen. Das Gewinde lässt sich dementsprechend mit hoher Genauigkeit einprägen.

Gemäß einer bevorzugten Weiterbildung der vorliegenden Erfindung sind Mittel vorgesehen, den Dorn konzentrisch zu den Haltebacken zu justieren. Solche Mittel sind bevorzugt durch einen Einstellblock gegeben, dessen Lage quer zu der linearen Bewegung des Dorns einstellbar ist und der gegenüber dem Arbeitstisch festlegbar ist. Der Einstellblock kann mit einer Grundplatte unmittelbar verbunden sein, die üblicherweise das Getriebe trägt und fest mit einem Getriebegehäuse verbunden ist. Der Grundplatte sind Justierschrauben zugeordnet, die bevorzugt gegen eine Gegenfläche der Stanzvorrichtung anliegen und dagegen verspannt ist. So kann die Grundplatte zusammen mit dem Getriebegehäuse über die Justierschrauben exakt relativ zu den Haltebacken positioniert werden. Bei dieser Beschreibung wird davon ausgegangen, dass das Getriebe mit dem Getriebegehäuse fest verbunden ist und dementsprechend beide in ihrer Lage festgelegt sind. Diese Beschreibung lässt sich von der Überlegung leiten, dass der Dorn zusammen mit dem Getriebe und dem Getriebegehäuse und der Grundplatte zwar als Bestandteil des Unterteils ausgebildet, jedoch relativ zu dem Arbeitstisch bewegt werden können. Im Bereich des Dorns wird die Auflagefläche für den Blechstreifen in der Regel durch die Oberfläche der beiden Haltebacken gebildet, die in der Regel durch die Grundplatte abgestützt sind.

Das Oberteil trägt bevorzugt eine höhenbewegliche Prägeplatte, die beim Einprägen des Gewindes auf der den Haltebacken gegenüberliegenden Seite gegen den Blechstreifen anliegt und diesen gegen die Haltebacken drückt. Die zuvor erwähnten Klemmblöcke werden üblicherweise durch diese Prägeplatte gehalten und sind dort lösbar befestigt. Zusammen mit der Prägeplatte sind diese Klemmblöcke höhenbeweglich und führen und/oder lagern die Haltebacken insbesondere beim Einprägen des Gewindes wider. Dazu haben die Klemmblöcke Haltebacken bevorzugt jeweils eine Verriegelungsfläche, die beim Einprägen des Gewindes gegenüberliegend zu dem Dorn an den Haltebacken anliegt.

Bei dem erfindungsgemäßen Verfahren wird zunächst bevorzugt aus dem Blechstreifen ein Loch ausgetanzt, dessen Ränder in einem nachfolgenden Umformschritt zu einer Hülse gezogen werden, die sich im Wesentlichen rechtwinklig zu der Oberfläche des Blechstreifens erstreckt. In einem nachfolgenden Umformschritt wird das freie Ende der Hülse, d.h. die Stirnseite vorzugsweise nach innen umbördelt. Der nach innen umbördelte Teil wird ausgestanzt und abgeführt. In dieser Weise vorbereitet wird danach an der Hülse das Gewinde eingeprägt. Bei diesem Einprägen des Gewindes befindet sich die Hülse bevorzugt an dem einheitlichen Blechstreifen, der mit der Zuführbreite der Blechstreifen in die Stanzvorrichtung vorgesehen ist. Mit anderen Worten werden Stanzbearbeitungen am Außenumfang der Hülse zur Ausbildung einer Befestigungslasche oder eines oder mehrerer Gewindeaugen nach dem Einprägen des Gewindes durchgeführt. So wird die Hülse bestmöglich beim Einprägen des Gewindes von dem umliegenden Material des Blechstreifens gestützt und stabilisiert.

Auch das Schneiden des Gewindes erfolgt üblicherweise in dem Blechstreifen und bevor dieses zur Ausbildung der Halterung näher beschnitten wird. Anschließend werden im Bereich der Gewindebohrungen die Gewindeaugen durch Stanzen freigeschnitten, ggf. oder alternativ wird eine Befestigungslasche freigeschnitten. Es verbleibt eine Halterung, die neben der Gewindehülse Befestigungselemente an der Außenumfangsfläche der Gewindehülse aufweist, um die Halterung mit einem Lampengehäuse zu verbinden. Sämtliche Umformschritte zur Herstellung der Halterung in Endkontur werden an dem kontinuierlichen Blechstreifen durchgeführt. Erst nach Beendigung dieser Umformschritte wird die fertige Halterung mit der mit dem Gewinde versehenen Hülse von dem Blechstreifen abgetrennt. Das Bauteil lässt sich unmittelbar als Halterung für eine Lampenfassung an einem Lampengehäuse anschrauben bzw. anderweitig befestigen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine Seitenansicht einer Vorrichtung zur Herstellung einer Halterung aus einem Blechstreifen;
- Figur 2: eine Querschnittsansicht der in Figur 1 in der Seitenansicht gezeigten Gewindeprägestation;
- Figur 3: eine perspektivische Seitenansicht eines Zahnrades des Getriebes;
- Figur 4: eine perspektivische Seitenansicht einer Stellspindel des Getriebes;
- Figur 5: eine Längsschnittsansicht der Spindel;
- Figur 6: eine perspektivische Seitenansicht eines profilierten Domes;
- Figur 7: eine perspektivische Seitenansicht einer Haltebacke;
- Figur 8: eine perspektivische Seitenansicht eines Klemmblocks;
- Figur 9: eine perspektivische Seitenansicht einer Gewindebuchse;
- Figur 10: eine perspektivische Explosionsdarstellung wesentlicher Bestandteile der Gewindeprägestation;
- Figur 11: eine Draufsicht auf eine mit dem Ausführungsbeispiel erstellte Halterung;
- Figur 12: eine Seitenansicht der Halterung nach Figur 8 und
- Figur 13: ein bearbeiteter Blechstreifen.

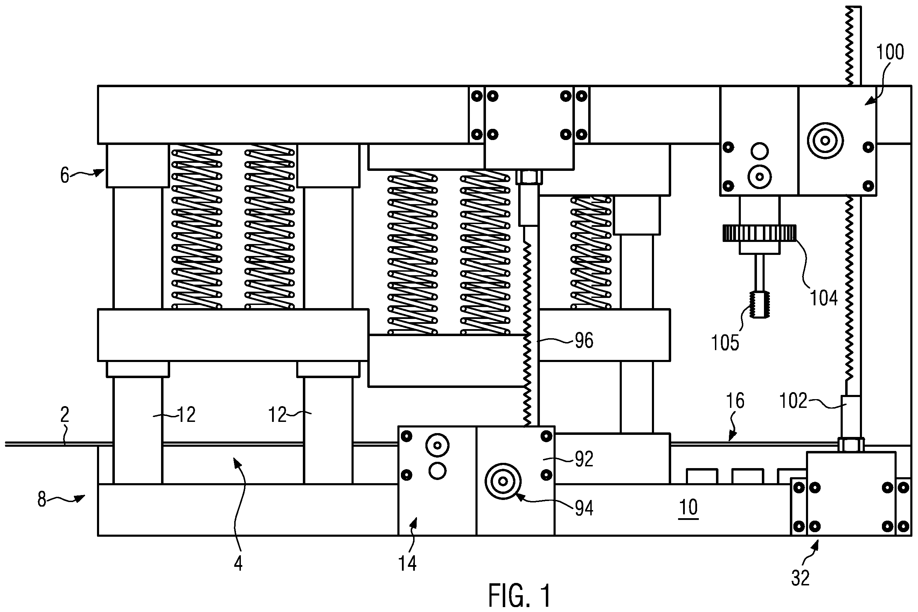

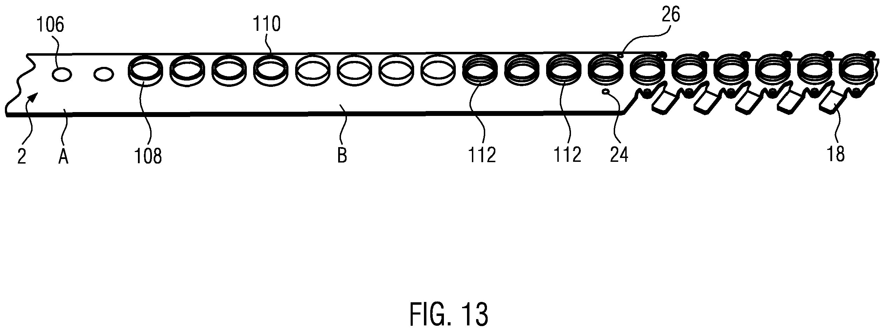

In der in Figur 1 gezeigten perspektivischen Seitenansicht wird ein Blechstreifen 2 in Bildrichtung von links nach rechts durch die Vorrichtung hindurchgeführt. Diese hat einen ersten Stanzbereich 4 mit nicht dargestellten Stempeln, die einem Oberteil 6 zugeordnet sind, und Matrizen, die einem Unterteil 8 zugeordnet sind. Das Unterteil 8 ist mit einer Basis 10 fest verbunden, die Führungszylinder 12 für die höhenverschiebliche Führung des Oberteils 6 trägt. In diesem ersten Stanzbereich 4 des gezeigten Ausführungsbeispiels wird aus dem ebenen Blechstreifen A ein Blechstreifen B mit einer Hülse geformt, die einseitig von der Ebene des Blechstreifens 2 abragt (vgl. Figur 13).

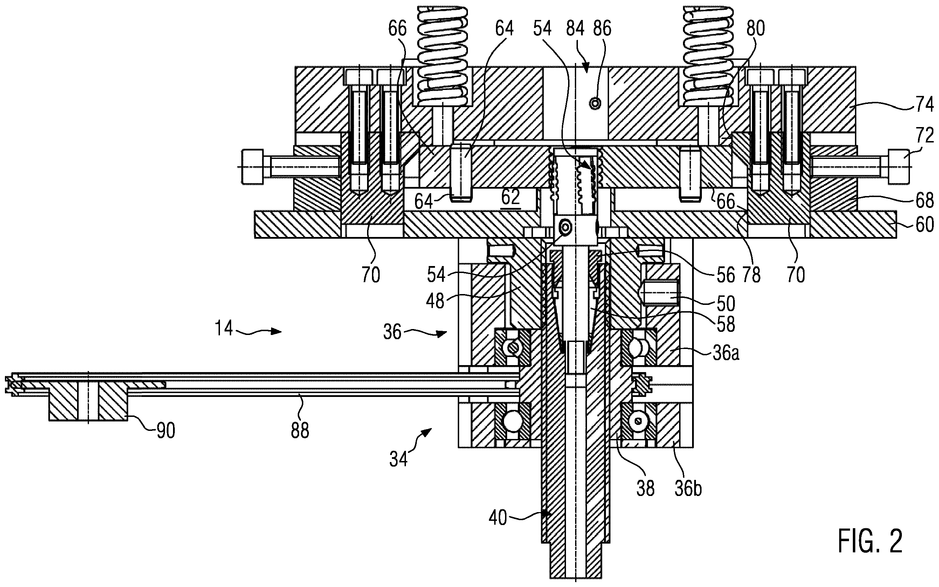

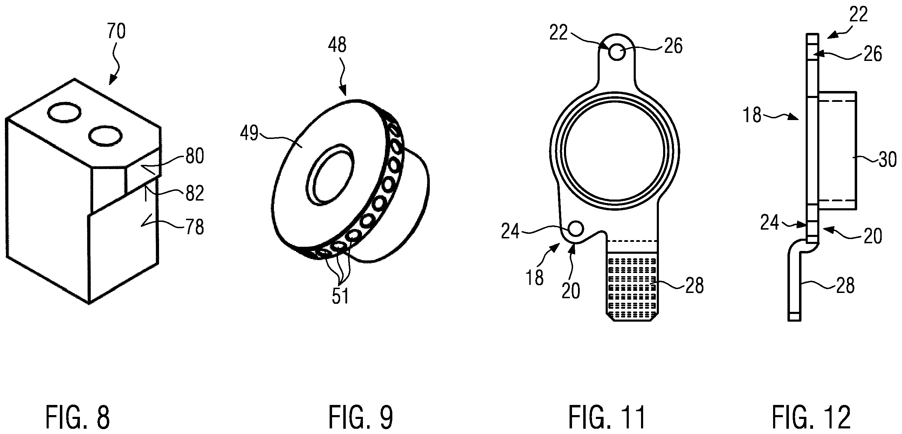

In Förderrichtung hinter diesem Stanzbereich ist eine Gewindeprägestation 14 angeordnet, die in der Schnittansicht in Figur 2 verdeutlicht ist. Hinter dieser Gewindeprägestation befindet sich ein zweiter Stanzbereich 16, der die in Figur 11 erkennbare Kontur einer Halterung 18 ausstanzt, so auch zwei Gewindeaugen 20, 22 mit den dazugehörigen Durchbrechungen 24, 26 und eine mit Bezugszeichen 28 gekennzeichnete Lasche. Die in dem ersten Stanzbereich 4 durch Umformen ausgebildete Hülse ist mit Bezugszeichen 30 gekennzeichnet. Es werden in dem zweiten Stanzbereich 16 zunächst in einem ersten Hub die beiden Durchbrechungen 24, 26 in dem ebenen Blechstreifen ausgestanzt. In einem darauffolgenden Hub werden die Gewindeaugen 20, 22 und die Lasche ausgestanzt. Es folgen Umformschritte zum Umbiegen der Lasche in der in Figur 8 näher dargestellten Ausgestaltung.

Diesem zweiten Stanzbereich 16 folgt eine mit Bezugszeichen 32 gekennzeichnete Gewindeschneidstation zum Ausbilden von Gewindegängen in den jeweiligen Durchbrechungen 24, 28. So hat die Gewindeschneidstation zwei nicht näher dargestellte drehbare Gewindeschneider, die auf die Durchbrechungen 24, 26 ausgerichtet sind und hierin bei einem Hub des zugeordneten Oberteils in den Durchbrechungen 24, 26 Gewinde schneiden.

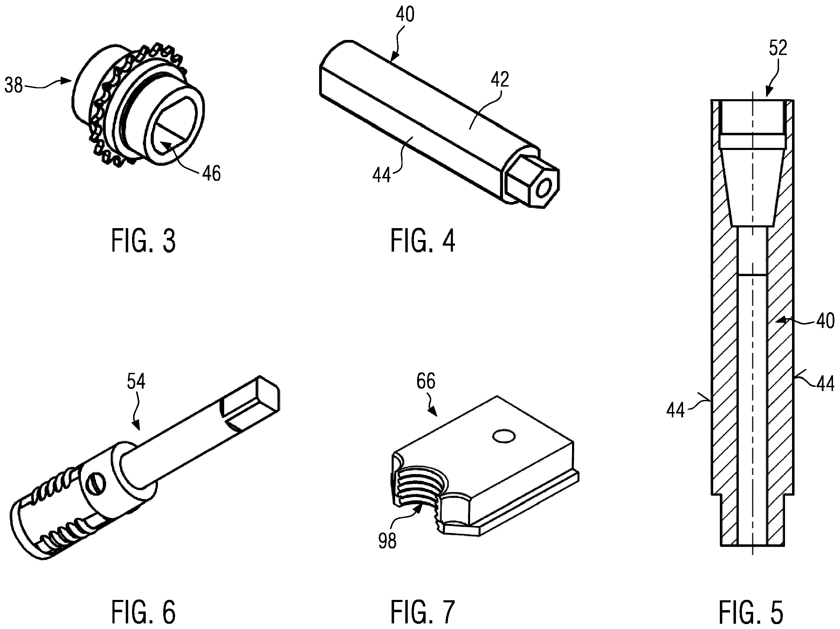

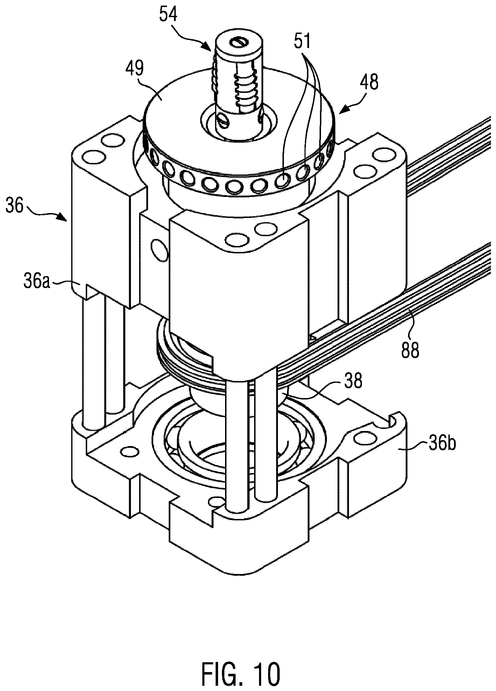

Die Gewindeprägestation 14 ist in der Querschnittsansicht in Figur 2 dargestellt. Die Gewindeprägestation 14 hat ein Getriebe 34 mit einem Getriebegehäuse 36, in dem das in Figur 3 näher dargestellte Zahnrad, das als Kettenrad 38 ausgebildet ist, frei drehbar gelagert ist. Das Kettenrad 38 ist zwischen einem Getriebegehäuseoberteil 36a und einem Getriebegehäuseunterteil 36b eingespannt (vgl. Figur 10). Das Getriebe 34 weist ferner eine in Figur 4 perspektivisch wiedergegebene Leitspindel 40 auf, die an ihrer Außenumfangsfläche mit einem Spindelgewinde 42 versehen ist und an gegenüberliegenden Außenumfangsflächensegmenten Wangen 44 hat. Das Kettenrad 38 hat eine mit korrespondierender Ausgestaltung versehene Durchgangsbohrung 46, in der die Leitspindel 40 über die Wangen 44 verdrehfest jedoch frei längsverschieblich gehalten ist.

Innerhalb des Getriebegehäuses 36 und in axialer Verlängerung des Kettenrades 38 ist eine im Gewindeeingriff mit der Leitspindel 40 stehende Gewindebuchse 48 angeordnet, die über eine Madenschraube 50 in ihrer winkeligen Ausrichtung relativ zu dem Getriebegehäuse 36 festlegbar ist. Hierdurch lässt sich die Winkellage der Leitspindel 40 in einer vorbestimmten axialen Position verstellen. Die Gewindebuchse 48 hat einen Kranz 49, der auf dem Getriebegehäuse 36 aufliegt und mit einer Teilung von 15° auf dem Umfang mit Bohrungen 51 versehen ist, in die nicht gezeigte Feststellmittel eingreifen, um die winkelige Ausrichtung der Gewindebuchse 48 exakt vorzugeben.

Wie Figur 5 verdeutlicht, hat das dem Getriebe 34 abgewandte Ende der Leitspindel 40 eine konische Aufnahme 52 zur Arretierung eines Einspannungsendes des in Figur 6 gezeigten profilierten Dorns 54. Diese Aufnahme 52 ist an ihrer Öffnung mit einem Gewinde versehen, um über eine Haltemutter 56 eine in der Werkzeugtechnik übliche Spannzange 58 in der Aufnahme 52 zu verspannen und hierbei das befestigungsseitige Ende des Dorns 54 mit der Leitspindel 40 zu verbinden und relativ hierzu zu zentrieren.

Das Getriebegehäuse 36 ist mit einer Grundplatte 60 verbunden, die sich quer zur Zeichnungsebene gemäß Figur 2 erstreckende Längsführungsschlitze 62 aufweist, in welche Zylinderstifte 64 eingreifen, die jeweils eine Haltebacke 66 durchsetzen. Die Grundplatte 60 weist eine sich quer zu der Zeichnungsebene gemäß Figur 2 erstreckende Haltebackenführung auf, die auf Höhe der Haltebacke 66 in der Grundplatte 60 ausgespart ist. Unterhalb dieser Haltebackenführung und innerhalb des Längsführungsschlitzes 62 ist jeweils eine nicht dargestellte Feder vorgesehen, die mit dem Zylinderstift 64 zusammenwirkt, sodass die Haltebacke 66 relativ zu der durch die Leitspindel 40 gegebenen Mittellängsachse nach außen gedrängt wird.

Die Grundplatte 60 weist ferner nach außen weisende, hier nicht zu erkennende Gewindebohrungen aus, über welche mit Bezugszeichen 68 gekennzeichnete Einstellbacken unter Einschluss von Klemmblöcken 70 gegen die Grundplatte 66 verschraubt sind. Die Einstellbacken 68 haben hierfür sich parallel zu der Zeichenebene gemäß Figur 2 erstreckende Führungsflächen, die zwischen sich einen der jeweiligen Klemmblöcke 70 aufnehmen und führen. Die Einstellbacken 68 sind ferner mit einer Gewindebohrung für eine mit Bezugszeichen 72 gekennzeichnete Stellschrauben versehen, über welche die Grundplatte 60, die dem Unterteil der Stanzvorrichtung zugeordnet ist, zu Montage- oder Kalibrierungszwecken mit einer Prägeplatte 74 verbunden werden kann, die dem Oberteil der Stanzvorrichtung zugeordnet ist. Diese Prägeplatte 74 trägt die Klemmblöcke 70, die in der in Figur 2 gezeigten Endlage in an der Grundplatte 60 ausgebildete Ausnehmungen 76 eindringen. Die Klemmblöcke 70 sind lösbar mit der Prägeplatte 74 verbunden.

Die Klemmblöcke 70 haben jeweils eine gestufte Führungsfläche mit einem ersten Flächenabschnitt 78, einem zweiten Flächenabschnitt 80 und einem dritten sich schräg erstreckenden und dazwischen vorgesehenen Rampenabschnitt 82. Die ersten und zweiten Flächenabschnitte 78, 80 erstrecken sich parallel zu der Mittellängsachse der Leitspindel 40. In der in Figur 2 gezeigten Endlage werden die Haltebacken 66 in einer aufeinander zu gerichteten Lage durch die zweiten Flächenabschnitte 80 gehalten und verriegelt. In dieser Lage erfolgt das Prägen eines Gewindes an der Hülse 30. In Richtung auf diese Endlage und davon weg gleiten die Haltebacken 66 aufgrund der Federvorspannung über den Rampenabschnitt 82 ab, bis sie sich an den ersten Flächenabschnitt 78 angelegt haben. In dieser Ausgangslage kann eine unbearbeitete Hülse 30 zwischen die Haltebacken 66 geführt bzw. eine mit dem eingeprägten Gewinde bearbeitete Hülse 30 aus dem Bereich zwischen den Haltebacken 66 entfernt werden.

Die Prägeplatte 74 hat eine konzentrisch zu der Mittellängsachse ausgebildete Schmierbohrung 84, zu der sich eine Schmiermittelöffnung 86 öffnet, über welche oberhalb des Dorns 54 und der Haltebacke 66 Schmiermittel abgegeben wird, um die beweglichen Teile im Rahmen der Prägebearbeitung zu schmieren. Wie die Figuren 1 und 2 in Zusammenschau erkennen lassen, ist das Kettenrad 36 über eine Rollenkette 88 mit einem Antriebsrad 90 wirkverbunden. Das Antriebsrat 90 ist wiederum in einen Übersetzungsgetriebe 92 der Gewindeprägestation 14 aufgenommen, das in Figur 1 erkennbar ist. Dieses Übersetzungsgetriebe 92 hat ein Zahnrad 94, welches mit einer Zahnstange 96 kämmt, die fest an dem Oberteil 4 montiert ist. Die relative Verschiebung zwischen dem Oberteil 6 und dem Unterteil 8 führt dementsprechend zu einer zyklischen linearen Bewegung der Zahnstange 96 und dementsprechend zu einem zyklischen Betrieb des Übersetzungsgetriebes 92 und des Getriebes 34, sodass das Kettenrad 38 alternierend links und rechts gedreht und damit die Leitspindel 40 axial verschoben und aufgrund des Gewindeeingriffs in der Gewindebuchse 48 dabei gedreht wird.

Wie Figur 6 verdeutlicht, hat der Dorn 54 eine Ausgestaltung, wie sie im Wesentlichen aus der FR 2 787 048 vorbekannt ist.

Die Figur 7 zeigt die perspektivische Seitenansicht der Haltebacke 66, die in der Endstellung mit der anderen, daran anliegenden Haltebacke 66 eine zylindrische Bohrung zwischen sich einschließt, die mit einem umlaufend steigenden Gewinde als Gegenprofilierung 98 versehen ist. Eine entsprechende Gewindesteigung hat auch der Dorn 54. Durch angepasste Voreinstellung aufgrund der Gewindebuchse 48 dringt der profilierte Dorn 54 mit seinem Außenprofil in die zwischen den beiden Haltebacken 66 vorgesehene innenumfängliche Gegenprofilierung 98 ein, sodass das Material der Hülse 30 kaltverformt wird, um ein Elektrogewinde zu erhalten.

In der Gewindeschneidstation 32 befindet sich ein weiteres Übersetzungsgetriebe 100, welches mit dem Oberteil 6 verbunden ist und mit einer Zahnstange 102 zusammenwirkt, die fest an der Basis 10, d.h. dem Unterteil 8 montiert ist. Das Übersetzungsgetriebe 100 wirkt über eine Rollkette 104 mit einem nicht dargestellten Antriebsrad zusammen, dessen Drehbewegung auf zwei Spannhülsen übertragen wird, die jeweils einen Gewindeschneider tragen von denen ein Gewindeschneider 105 in Figur 1 dargestellt ist. Diese nicht dargestellten Gewindeschneider sind so montiert und ausgerichtet, dass diese bei einem Hub der Stanzvorrichtung in die Durchbrechungen 24, 26 eindringen und dort ein Gewinde ausschneiden. Auch hier bewegen sich die Gewindeschneider drehend zyklisch hin und her entsprechend der Höhenbewegung des Oberteils 6 relativ zu dem Unterteil 8.

Am Ende der hier diskutierten Bearbeitungsstrecke wird durch Abkanten die Halterung 18 individualisiert. Sie ist danach in der in den Figuren 11 und 12 gezeigten Form in Endkontur hergestellt.

Die Figur 13 zeigt eine perspektivische Seitenansicht des Blechstreifens 2 in den verschiedenen Bearbeitungsstadien, wobei von links nach rechts der zunächst unbearbeitete Blechstreifen A mit einer Ausnehmung 106 versehen wird, die ausgestanzt wird. Der Rand dieser Ausnehmung 106 wird zu einer Hülse 108 ausgeformt, deren stirnseitiger Rand nach innen umbördelt wird. Die Umbördelung ist mit dem Bezugszeichen 110 gekennzeichnet. Diese Umbördelung 110 wird danach ausgestanzt. Die so vorbereitete Hülse wird danach der Gewindeprägestation 14 zugeführt, wo eine mit Bezugszeichen 112 gekennzeichnete Gewindehülse ausgebildet wird. Danach werden in dem Blechstreifen 2 die Durchbrechungen 24, 26 ausgebildet. In der nachfolgenden Station werden die die Durchbrechungen 24, 26 umgebenden Gewindeaugen 20, 22 ausgestanzt und es wird die Lasche 28 ausgestanzt. Danach wird die Lasche 28 geknickt, sodass sich die Lasche 28 in einer Ebene erstreckt, die parallel zu der Ebene des Blechstreifens 2 verläuft, jedoch mit Abstand hierzu vorgesehen ist. In der nachfolgenden Gewindeschneidstation 32 werden die Durchbrechungen 24, 26 mit Gewinden versehen. Danach wird jede einzelne Gewindehülse 112 mit den daran vorgesehenen Halteelementen von den Blechstreifen 2 abgeschnitten, um die fertige Halterung 18 zu erhalten.

### Bezugszeichenliste

- 2: Blechstreifen
- 4: erster Stanzbereich
- 6: Oberteil
- 8: Unterteil
- 10: Basis
- 12: Führungszylinder
- 14: Gewindeprägestation
- 16: zweiter Stanzbereich
- 18: Halterung
- 20: Gewindeauge
- 22: Gewindeauge
- 24: Durchbrechung
- 26: Durchbrechung
- 28: Lasche
- 30: Hülse
- 32: Gewindeschneidstation
- 34: Getriebe
- 36: Getriebegehäuse
- 36a: Getriebegehäuseoberteil
- 36b: Getriebegehäuseunterteil
- 38: Kettenrad
- 40: Leitspindel
- 42: Spindelgewinde
- 44: Wange
- 46: Durchgangsbohrung
- 48: Gewindebuchse
- 49: Kranz
- 50: Madenschraube
- 51: Bohrung
- 52: Aufnahme
- 54: Dorn
- 56: Haltemutter
- 58: Spannzange
- 60: Grundplatte
- 62: Längsführungsschlitz
- 64: Zylinderstift
- 66: Haltebacke
- 68: Einstellbacke
- 70: Klemmblock
- 72: Stellschraube
- 74: Prägeplatte
- 76: Ausnehmung
- 78: erster Flächenabschnitt
- 80: zweiter Flächenabschnitt
- 82: Rampenabschnitt
- 84: Schmierbohrung
- 86: Schmiermittelöffnung
- 88: Rollkette
- 90: Antriebsrad
- 92: Übersetzungsgetriebe
- 94: Zahnrad
- 96: Zahnstange
- 98: Gegenprofilierung
- 100: Übersetzungsgetriebe
- 102: Zahnstange
- 104: Rollkette
- 105: Gewindeschneider
- 106: Aussparung
- 108: Hülse
- 110: Umbördelung
- 112: Gewindehülse

## Patentansprüche

1. Vorrichtung zur Herstellung eines Gewindeformteils (18) aus einem Blechstreifen (2), der durch Umformen mit einer einteilig an dem Blechstreifen (2) ausgebildeten Hülse (30) versehen ist, wobei die Vorrichtung
einen Arbeitstisch (8) zur Auflage des Blechstreifens (2) aufweist, **dadurch gekennzeichnet dass** die Vorrichtung
einen profilierten Dorn (54) zum Einprägen eines Gewindes an der Hülse (30), der drehbar und axial verschieblich ist,
ein Getriebe (34) zur Zwangskopplung einer Drehbewegung des Dorns (54) mit dessen axialer Verschiebung und
mindestens zwei Haltebacken (66), die aufeinander zu beweglich und zum Einprägen des Gewindes an die Hülse (30) mit einer Gegenprofilierung (98) zu dem profilierten Dorn (54) versehen sind,
aufweist.

2. Vorrichtung nach Anspruch 1 **dadurch gekennzeichnet, dass** der profilierte Dorn (54) und die Haltebacken (66) an einer Gewindeprägestation (16) vorgesehen sind, der in Bewegungsrichtung des umzuformen Blechstreifens (2) mehrere Bearbeitungsstationen (4) vor- bzw. nachgelagert sind, in denen der Blechstreifen (2) zur Ausbildung der Hülse (30) und zumindest einer daran angeformten Befestigungslasche (20, 22, 28) schrittweise umgeformt wird.

3. Vorrichtung nach Anspruch 1 oder 2, **dadurch gekennzeichnet, dass** der Dorn einem ortsfesten Unterteil (8) einer Stanzvorrichtung zugeordnet ist, die ein höhenbewegliches Oberteil (6) aufweist, das mit zumindest einem Stempel zur Ausbildung der Hülse (30) versehen ist, der in Förderrichtung des Blechstreifens dem Dorn (54) vorgelagert ist und das Getriebe (34) mit einer Zahnstange (96) antriebsverbunden ist, die mit einem dem Getriebe (34, 92) zugeordneten Zahnrad (94) kämmt und fest mit dem Oberteil (6) verbunden ist.

4. Vorrichtung nach Anspruch 2 oder 3, **gekennzeichnet durch** eine Gewindeschneidstation (32) mit einem drehbar angetriebenen Gewindeschneider, der über ein Gewindeschneidgetriebe (100) antreibbar ist, das an dem Oberteil (6) montiert ist und ein Zahnrad aufweist, das mit einer fest mit dem Unterteil (8) verbundenen Zahnstange (102) kämmt.

5. Vorrichtung nach einem der vorherigen Ansprüche, **gekennzeichnet durch** eine Einstelleinrichtung (48, 50), mit welcher bei einer gegebenen axialen Position des Dorns (54) dessen Winkellage einstellbar ist.

6. Vorrichtung nach einem der vorherigen Ansprüche, **dadurch gekennzeichnet, dass** das Getriebe (34) ein Zahnrad (38) umfasst, in dem eine Leitspindel (40) verdrehfest jedoch axial verschieblich relativ zu dem Zahnrad (38) aufgenommen ist und mit einer Gewindebuchse (48) im Eingriff steht, die zwischen dem Zahnrad (38) und dem Dorn (54) vorgesehenen ist, und dass das Zahnrad (38) drehbar an einem Getriebegehäuse (36) gelagert ist, das eine Aufnahme für die Gewindebuchse (48) ausbildet, in der die Gewindebuchse (48) konzentrisch zu der Leitspindel (40) festlegbar ist.

7. Vorrichtung nach einem der vorherigen Ansprüche, **dadurch gekennzeichnet, dass** die Bewegung der Haltebacken (66) mit der linearen Bewegung des Dorns (54) zwangsgekoppelt ist.

8. Vorrichtung nach einem der vorherigen Ansprüche, **gekennzeichnet durch** eine höhenbewegliche Prägeplatte (74), die Klemmblöcke (70) trägt, die beim Einprägen des Gewindes an in Bezug auf den Dorn (54) gegenüberliegenden Seiten der Haltebacken (66) über Verriegelungsflächen (78) gegen die Haltebacken (66) anliegen.

9. Verfahren zur Herstellung eines Gewindeformteils aus einem Blechstreifen (2), unter Verwendung einer Vorrichtung gemäß einem der Ansprüche 1 bis 9, das die folgenden Schritte umfasst:
Umformen des Blechstreifens (2), derart dass an dem Blechstreifen (2) eine Hülse (30) ausgebildet wird,
Einprägen eines Gewindes zwischen einem in die Hülse (30) eindringenden Dorn (54) und zumindest zwei außenseitig gegen die Hülse (30) anlegbaren Haltebacken (66),
Abtrennen der mit dem Gewinde versehenem Hülse (30) von dem Blechstreifen (2).

## Claims

1. A device for producing a threaded part (18) from a sheet metal strip (2), which is provided by forming with a sleeve (30) formed in one piece on the sheet metal strip (2), the device comprises
a work table (8) for supporting the sheet metal strip (2), **characterised in that** the device comprises a profiled mandrel (54) for impressing a thread on the sleeve (30), which is rotatable and axially displaceable,
a gear (34) for the forced coupling of a rotary movement of the mandrel (54) with its axial displacement and
at least two holding jaws (66) which can be moved towards each other and are provided with a counter-profiling (98) to the profiled mandrel (54) for impressing the thread onto the sleeve (30).

2. The device according to claim 1, **characterised in that** the profiled mandrel (54) and the holding jaws (66) are provided on a thread stamping station (16), which is preceded or followed in the direction of movement of the sheet metal strip (2) to be formed by a plurality of machining stations (4), in which the sheet metal strip (2) is formed stepwise to form the sleeve (30) and at least one fastening lug (20, 22, 28) formed thereon.

3. The device according to claim 1 or 2, **characterised in that** the mandrel is associated with a stationary lower part (8) of a punching device, which has a vertically movable upper part (6), which is provided with at least one punch for forming the sleeve (30), which is mounted upstream of the mandrel (54) in the conveying direction of the sheet metal strip and the gear (34) is drivingly connected to a rack (96) which meshes with a gear wheel (94) associated with the gear (34, 92) and is fixedly connected to the upper part (6).

4. The device of claim 2 or 3, **characterised by** a threading station (32) having a rotatably driven threader drivable through a threading gear (100) mounted on the upper part (6) and having a gear meshing with a rack (102) fixedly connected to the lower part (8).

5. The device according to one of the previous claims, **characterised by** an adjusting device (48, 50) with which, for a given axial position of the mandrel (54), its angular position can be adjusted.

6. The device according to one of the previous claims, **characterised in that** the gear (34) comprises a gear wheel (38) in which a lead screw (40) is received in a rotationally fixed but axially displaceable manner relative to the gear wheel (38) and is in engagement with a threaded bush (48), which is provided between the gear wheel (38) and the mandrel (54), and that the gear wheel (38) is rotatably mounted on a gear housing (36) which forms a receptacle for the threaded bush (48), in which the threaded bush (48) can be fixed concentrically to the lead screw (40).

7. The device according to one of the previous claims, **characterised in that** the movement of the holding jaws (66) is positively coupled to the linear movement of the mandrel (54).

8. The device according to one of the previous claims, **characterised by** a vertically movable stamping plate (74) carrying clamping blocks (70) which, when the thread is stamped in, bear against the holding jaws (66) on opposite sides of the holding jaws (66) with respect to the mandrel (54) via locking surfaces (78).

9. A method for producing a thread-formed part from a sheet metal strip (2), using a device according to one of claims 1 to 9, which includes the following steps:
forming the sheet metal strip (2) in such a way that a sleeve (30) is formed on the sheet metal strip (2),
stamping of a thread between a mandrel (54) penetrating into the sleeve (30) and at least two holding jaws (66) which can be placed against the outside of the sleeve (30),
separating the threaded sleeve (30) from the metal strip (2).

## Revendications

1. Dispositif de fabrication d'une pièce filetée (18) à partir d'une bande de tôle (2), qui est munie par formage d'un manchon (30) formé d'une seule pièce sur la bande de tôle (2), le dispositif comprend
une table de travail (8) pour supporter la bande de tôle (2), **caractérisée en ce que** le dispositif comprend un mandrin profilé (54) pour imprimer un filet sur le manchon (30), qui est rotatif et déplaçable axialement,
un engrenage (34) pour l'accouplement forcé d'un mouvement rotatif du mandrin (54) avec son déplacement axial et
au moins deux mâchoires de maintien (66) qui peuvent être rapprochées l'une de l'autre et sont pourvues d'un contre-profil (98) par rapport au mandrin profilé (54) pour l'impression du fil sur le manchon (30).

2. Dispositif selon la revendication 1, **caractérisé en ce que** le mandrin profilé (54) et les mâchoires de maintien (66) sont prévus sur un poste d'estampage de fil (16), qui est précédé ou suivi dans le sens de déplacement de la bande de tôle (2) à former par plusieurs postes d'usinage (4), dans lesquels la bande de tôle (2) est formée par étapes pour former le manchon (30) et au moins une patte de fixation (20, 22, 28) formée sur celui-ci.

3. Dispositif selon la revendication 1 ou 2, **caractérisé en ce que** le mandrin est associé à une partie inférieure fixe (8) d'un dispositif d'estampage, qui présente une partie supérieure (6) mobile verticalement, qui est munie d'au moins un poinçon pour former le manchon (30), qui est monté en amont du mandrin (54) dans la direction de transport de la bande de tôle et la transmission (34) est reliée en entraînement à une crémaillère (96) qui engrène avec une roue dentée (94) associée à la transmission (34, 92) et est reliée de manière fixe à la partie supérieure (6).

4. Dispositif selon la revendication 2 ou 3, **caractérisé par** un poste d'enfilage (32) comportant un enfilage entraîné en rotation, pouvant être entraîné par un engrenage d'enfilage (100) monté sur la partie supérieure (6) et comportant une roue dentée engrenant avec une crémaillère (102) reliée de manière fixe à la partie inférieure (8).

5. Dispositif selon l'une des revendications précédentes, **caractérisé par** un dispositif de réglage (48, 50) avec lequel, pour une position axiale donnée du mandrin (54), sa position angulaire peut être ajustée.

6. Dispositif selon l'une des revendications précédentes, **caractérisé en ce que** l'engrenage (34) comprend une roue dentée (38) dans laquelle une vis-mère (40) est reçue de manière fixe en rotation mais déplaçable axialement par rapport à la roue dentée (38) et est en prise avec une douille filetée (48), qui est prévue entre la roue dentée (38) et le mandrin (54), et que la roue dentée (38) est montée à rotation sur un carter d'engrenages (36) qui forme un logement pour la douille filetée (48), dans lequel la douille filetée (48) peut être fixée de manière concentrique à la vis-mère (40).

7. Dispositif selon l'une des revendications précédentes, **caractérisé en ce que** le mouvement des mâchoires de maintien (66) est couplé de manière positive au mouvement linéaire du mandrin (54).

8. Dispositif selon l'une des revendications précédentes, **caractérisé par** une plaque d'estampage (74) mobile verticalement, portant des blocs de serrage (70) qui, lors de l'estampage du filetage, s'appuient contre les mâchoires de maintien (66) sur des côtés opposés des mâchoires de maintien (66) par rapport au mandrin (54) par l'intermédiaire de surfaces de blocage (78).

9. Procédé de fabrication d'une pièce filetée à partir d'une bande de tôle (2), en utilisant un dispositif selon l'une des revendications 1 à 9, qui comprend les étapes suivantes:
former la bande de tôle (2) de telle sorte qu'un manchon (30) soit formé sur la bande de tôle (2),
estamper un filet entre un mandrin (54) pénétrant dans le manchon (30) et au moins deux mâchoires de maintien (66) qui peuvent être placées contre l'extérieur du manchon (30),
séparer le manchon fileté (30) de la bande de tôle (2).
